# EUROPEAN PATENT APPLICATION

(11) **EP 4 539 577 A1**
(43) Date of publication of application: **16.04.2025**
(21) Application number: 23849020.5
(22) Date of filing: 30.05.2023
(51) Int. Cl.: H04W 72/20, H04W 72/0446

(54) **PRIORITY-BASED TRANSMISSION METHOD AND APPARATUS**

(30) Priority: 01.08.2022 CN 202210913546
(71) Applicant: Huawei Technologies Co., Ltd., Shenzhen, Guangdong 518129 (CN)
(72) Inventor: CHEN, Erkai, Shenzhen, Guangdong 518129 (CN); QIN, Yi, Shenzhen, Guangdong 518129 (CN); XU, Rui, Shenzhen, Guangdong 518129 (CN); CAO, Youlong, Shenzhen, Guangdong 518129 (CN); XUE, Yifan, Shenzhen, Guangdong 518129 (CN)
(74) Representative: Isarpatent
(86) International application number: PCT/CN2023/096992
(87) International publication number: WO 2024/027310

(57) **Abstract**

A priority-based transmission method and transmission apparatus are provided. The method includes: receiving configuration information, where the configuration information is for configuring a measurement gap, the measurement gap is for reference signal measurement, and a time domain position of the measurement gap overlaps a time domain position of information transmission; and performing the information transmission when a priority of the information transmission is higher than a priority of the measurement gap. According to the priority-based transmission method in this application, impact of the reference signal measurement in the measurement gap on data transmission or information transmission of a time-critical service can be reduced.

## Description

This application claims priority to Chinese Patent Application No. 202210913546.0, filed with the China National Intellectual Property Administration on August 1, 2022 and entitled "PRIORITY-BASED TRANSMISSION METHOD AND TRANSMISSION APPARATUS", which is incorporated herein by reference in its entirety.

### TECHNICAL FIELD

This application relates to the communication field, and more specifically, to a priority-based transmission method and transmission apparatus.

### BACKGROUND

In a mobile cellular network, when a terminal device moves from one cell to another cell, handover needs to be performed between the cells. Before the handover, the terminal device needs to measure a neighboring cell, to determine when the handover needs to be performed. Measurement performed by the terminal device on the neighboring cell may include intra-frequency measurement (intra-frequency measurement) and inter-frequency measurement (inter-frequency measurement). The intra-frequency measurement means that a cell in which the terminal device is currently located and a to-be-measured target cell are on a same carrier frequency. In this case, the terminal device may perform the measurement by using a reference signal inserted during data transmission, without affecting data transmission and reception. The inter-frequency measurement means that a cell in which the terminal device is currently located and a to-be-measured target cell are on different carrier frequencies. A measurement gap (measurement gap, MG) is used for the inter-frequency measurement. During MG time, UE does not send or receive data, but adjusts a radio frequency receiver to a frequency of the target cell to perform the inter-frequency measurement. However, during the inter-frequency measurement, a time domain position of the MG may conflict with a time domain position of service data transmission, affecting service experience of a user.

### SUMMARY

Embodiments of this application provide a communication method and apparatus, to avoid impact on information transmission of a time-critical service when a time domain position of an MG conflicts with a time domain position of service data transmission.

According to a first aspect, a communication method is provided. The method may be performed by a terminal device, or may be performed by a component (for example, a processor, a chip, or a chip system) of the terminal device, or may be implemented by a logical module or software that can implement all or some functions of the terminal device. The method includes: receiving configuration information, where the configuration information is for configuring a measurement gap, the measurement gap is for reference signal measurement, and a time domain position of the measurement gap overlaps a time domain position of information transmission; and performing the information transmission when a priority of the information transmission is higher than a priority of the measurement gap.

For example, there may be one or more measurement gaps. If time domain positions of the plurality of measurement gaps overlap the time domain position of the information transmission, and the priority of the information transmission is higher than that of a measurement gap with a highest priority in the plurality of measurement gaps, the information transmission is performed.

Specifically, "when a priority of the information transmission is higher than a priority of the measurement gap" may also be expressed as "if a priority of the information transmission is higher than a priority of the measurement gap". In other words, "when a priority of the information transmission is higher than a priority of the measurement gap" is a prerequisite for "performing the information transmission". There may be no step or may be another step between "when a priority of the information transmission is higher than a priority of the measurement gap" and "performing the information transmission". This is not limited in this application.

For example, that a time domain position of the measurement gap overlaps a time domain position of information transmission may be that a time domain position of the measurement gap partially overlaps a time domain position of information transmission, or may be that a time domain position of the measurement gap completely overlaps a time domain position of information transmission. This is not limited in this application.

By way of example, and not limitation, the priority of the information transmission may be a priority of data transmission, or may be a priority of a signal, or may be a priority of a channel or a priority indicated by the channel.

Specifically, the measurement gap may be configured by using the following parameters: a measurement gap repetition period (measurement gap repetition period, MGRP), a measurement gap length (measurement gap length, MGL), a gapoffset (gapoffset), and the like.

When service data with a strict delay requirement needs to be transmitted, the foregoing method can be used to resolve a problem of an extra scheduling delay caused because data cannot be received or sent in the measurement gap, thereby improving service experience of a user.

With reference to the first aspect, in some implementations of the first aspect, the performing the information transmission when a priority of the information transmission is higher than a priority of the measurement gap includes: performing the information transmission when the priority of the measurement gap is configured as a low priority, and the priority of the information transmission is configured as a high priority.

Specifically, that the priority of the measurement gap is configured as a low priority may be implemented by including a configuration parameter in the configuration information. The configuration parameter indicates that the priority of the measurement gap is configured as a low priority.

By way of example, and not limitation, the configuration parameter is set to "low" or 0, indicating that the priority of the measurement gap is configured as a low priority.

Specifically, that the priority of the information transmission is configured as a high priority may be indicated by a priority index (priority index) of an uplink signal/channel or a downlink signal/channel.

By way of example, and not limitation, when a value of the priority index is 1, it indicates that the priority of the information transmission is configured as a high priority.

Data transmission is preferentially performed in the foregoing manner in which the priority of the information transmission is configured as a high priority and the priority of the measurement gap is configured as a low priority, thereby reducing impact of the reference signal measurement in the measurement gap on high-priority information transmission, and improving service performance.

With reference to the first aspect, in some implementations of the first aspect, the performing the information transmission when a priority of the information transmission is higher than a priority of the measurement gap includes: performing the information transmission when the priority of the measurement gap is configured as a low priority.

When the priority of the measurement gap is configured as a low priority, in the method, a priority of the reference signal measurement in the measurement gap is lower than the priority of the information transmission by default, ensuring normal information transmission to a greater extent.

With reference to the first aspect, in some implementations of the first aspect, the method includes: performing the reference signal measurement in the measurement gap when the priority of the information transmission is lower than the priority of the measurement gap.

Specifically, "when the priority of the information transmission is lower than the priority of the measurement gap" may also be expressed as "if the priority of the information transmission is lower than the priority of the measurement gap". In other words, "when the priority of the information transmission is lower than the priority of the measurement gap" is a prerequisite for "performing the reference signal measurement in the measurement gap". There may be no step or may be another step between "when the priority of the information transmission is lower than the priority of the measurement gap" and "performing the reference signal measurement in the measurement gap". This is not limited in this application.

Specifically, in this application, a reference signal may include a channel state information reference signal (channel state information reference signal, CSI-RS), a synchronization signal block (synchronization signal block, SSB), a sounding reference signal (sounding reference signal, SRS), a demodulation reference signal (demodulation reference signal, DMRS), and the like. It should be understood that the functions and specific examples of the reference signal that are listed above are merely examples for description, and shall not constitute any limitation on this application. This application does not exclude a possibility of defining a reference signal with another function or purpose in a future protocol.

When service data without a strict delay requirement needs to be transmitted, the reference signal measurement may be preferentially performed in the measurement gap by using the foregoing method, so that timely handover of a high mobility terminal device can be ensured.

With reference to the first aspect, in some implementations of the first aspect, the performing the reference signal measurement in the measurement gap when the priority of the information transmission is lower than the priority of the measurement gap includes:
performing the reference signal measurement in the measurement gap when the priority of the measurement gap is configured as a high priority, or the priority of the information transmission is configured as a low priority.

Specifically, that the priority of the measurement gap is configured as a high priority may be implemented by including a configuration parameter in the configuration information. The configuration parameter indicates that the priority of the measurement gap is configured as a high priority.

By way of example, and not limitation, the configuration parameter is set to "high" or 1, indicating that the priority of the measurement gap is configured as a high priority.

Specifically, that the priority of the information transmission is configured as a low priority may be indicated by a priority index (priority index) of an uplink signal/channel or a downlink signal/channel.

By way of example, and not limitation, when a value of the priority index is 0, it indicates that the priority of the information transmission is configured as a low priority.

The reference signal measurement is preferentially performed in the measurement gap in the foregoing manner in which the priority of the information transmission is configured as a low priority or the priority of the measurement gap is configured as a high priority, thereby reducing impact of low-priority information transmission on the reference signal measurement in the measurement gap, or reducing impact of information transmission on reference signal measurement in a high-priority measurement gap.

With reference to the first aspect, in some implementations of the first aspect, the information transmission includes information transmission in a discontinuous reception (discontinuous reception, DRX) active time period.

The DRX active time period includes at least one of a running time period of an inactivity timer (drx-Inactivity timer), a running time period of an uplink retransmission timer (drx-Retransmission Timer UL), and a running time period of a downlink retransmission timer (drx-Retransmission Timer DL).

Specifically, the running time period indicates an actual working time period, and the running time period is less than or equal to duration set by the timer.

When a time domain position of an active time period in a DRX mechanism overlaps the time domain position of the measurement gap, the foregoing method can be used to resolve a problem of an extra scheduling delay caused because data of the active time period in the DRX mechanism cannot be received or sent in the measurement gap, thereby improving the service experience of the user.

With reference to the first aspect, in some implementations of the first aspect, the priority of the information transmission is determined based on a priority indicated by a physical channel, and the physical channel is associated with the DRX active time period.

By way of example, and not limitation, the physical channel may be a physical uplink control channel (physical uplink control channel, PUCCH), a physical uplink shared channel (physical uplink shared channel, PUSCH), a physical downlink control channel (physical downlink control channel, PDCCH), a physical downlink shared channel (physical downlink shared channel, PDSCH), or the like.

For example, if the terminal device obtains the PDCCH through monitoring in a wake-up time period (on duration), the terminal device needs to start the inactivity timer (drx-Inactivity timer), and perform information or data transmission based on indication information of the PDCCH. The terminal device continues to monitor the PDCCH in the running time period of the inactivity timer (drx-Inactivity timer), and receives or transmits data that may arrive. A priority of the information or data transmission in the running time period of the inactivity timer (drx-Inactivity timer) after the PDCCH is obtained through monitoring may be determined based on a field that indicates a priority and that is carried in the PDCCH obtained through monitoring.

By way of example, and not limitation, when a value of a priority index carried in the PDCCH obtained through monitoring is 1, it indicates that the priority of the information or data transmission in the running time period of the drx-Inactivity timer is a high priority; and when the value of the priority index carried in the PDCCH obtained through monitoring is 0, it indicates that the priority of the information or data transmission in the running time period of the drx-Inactivity timer is a low priority.

Alternatively, when the foregoing PDCCH obtained through monitoring does not include the field indicating the priority, it may be considered by default that the priority of the information or data transmission in the running time period of the drx-Inactivity timer is a low priority.

The physical channel obtained through monitoring may indicate the priority of the information transmission in the DRX active time period, to ensure normal receiving and sending of important data or information in the DRX active time period, and improve the service performance.

With reference to the first aspect, in some implementations of the first aspect, the configuration information includes a parameter, and the parameter is for configuring the measurement gap as a high-priority measurement gap or a low-priority measurement gap.

A priority level of each measurement gap is directly configured, so that the terminal device can accurately determine, based on a priority of a current measurement gap and a priority of current information transmission, an operation that needs to be performed, to prevent impact on data transmission of a time-critical service.

With reference to the first aspect, in some implementations of the first aspect, the configuration information includes a threshold, and the threshold is for determining the measurement gap as a high-priority measurement gap or a low-priority measurement gap.

For example, five measurement gaps are configured for the terminal device, and gapPriority-r17 values of the five measurement gaps are respectively set to a value2, a value3, a value4, a value5, and a value6. If value2 > value3 > value4 > value5 > value6, when a threshold (gapPriorityThreshold) is the value4, it may be determined that two measurement gaps whose gapPriority-r17 values are the value2 and the value3 have high priorities, and two measurement gaps whose gapPriority-r17 values are the value5 and the value6 have low priorities.

Alternatively, if value2 < value3 < value4 < value5 < value6, when the threshold (gapPriorityThreshold) is the value4, it may be determined that two measurement gaps whose gapPriority-r17 values are the value2 and the value3 have low priorities, and two measurement gaps whose gapPriority-r17 values are the value5 and the value6 have high priorities.

A high-priority measurement gap or a low-priority measurement gap in the plurality of measurement gaps may be directly determined by configuring the threshold. In this method, a threshold may be adjusted to control whether a measurement gap has a high priority or a low priority, and flexibility is higher.

According to a second aspect, a communication method is provided. The method may be performed by a terminal device, or may be performed by a component (for example, a processor, a chip, or a chip system) of the terminal device, or may be implemented by a logical module or software that can implement all or some functions of the terminal device. The method includes: receiving configuration information, where the configuration information is for configuring a measurement gap, and the measurement gap is for reference signal measurement; and performing information transmission when a time domain position of the measurement gap overlaps a time domain position of the information transmission.

For example, that a time domain position of the measurement gap overlaps a time domain position of information transmission may be that a time domain position of the measurement gap partially overlaps a time domain position of information transmission, or may be that a time domain position of the measurement gap completely overlaps a time domain position of information transmission. This is not limited in this application.

Specifically, the measurement gap may be configured by using the following parameters: an MGRP, an MGL, a gapoffset, and the like.

When service data needs to be transmitted, the foregoing method can be used to resolve a problem of an extra scheduling delay caused because data cannot be received or sent in the measurement gap, thereby improving service experience of a user.

With reference to the second aspect, in some implementations of the second aspect, the information transmission includes information transmission in a discontinuous reception DRX active time period.

The DRX active time period includes at least one of a running time period of an inactivity timer, a running time period of an uplink retransmission timer, and a running time period of a downlink retransmission timer.

Specifically, the running time period indicates an actual working time period, and the running time period is less than or equal to duration set by the timer.

When a time domain position of an active time period in a DRX mechanism overlaps the time domain position of the measurement gap, the foregoing method can be used to resolve a problem of an extra scheduling delay caused because data of the active time period in the DRX mechanism cannot be received or sent in the measurement gap, thereby improving the service experience of the user.

According to a third aspect, a communication method is provided. The method may be performed by a terminal device, or may be performed by a component (for example, a processor, a chip, or a chip system) of the terminal device, or may be implemented by a logical module or software that can implement all or some functions of the terminal device. The method includes: receiving configuration information, where the configuration information is for configuring a measurement gap, and the measurement gap is for reference signal measurement; and receiving first indication information, where the first indication information indicates whether the terminal device activates the measurement gap.

Specifically, the measurement gap may be configured by using the following parameters: an MGRP, an MGL, a gapoffset, and the like.

In addition, the first indication information may further indicate a quantity of measurement occasions for activating the measurement gap, or the first indication information may further indicate a time length for activating the measurement gap.

In addition, the first indication information may further indicate a quantity of measurement occasions for deactivating the measurement gap, or the first indication information may further indicate a time length for deactivating the measurement gap.

When service data needs to be transmitted or a reference signal needs to be measured, an operation that needs to be performed by the terminal device can be flexibly indicated by using the foregoing method, to prevent delaying transmission of data with a high delay requirement or delaying mobile cell handover of the terminal device.

With reference to the third aspect, in some implementations of the third aspect, the information transmission includes information transmission in a discontinuous reception DRX active time period.

The DRX active time period includes at least one of a running time period of an inactivity timer, a running time period of an uplink retransmission timer, and a running time period of a downlink retransmission timer.

Specifically, the running time period indicates an actual working time period, and the running time period is less than or equal to duration set by the timer.

When a time domain position of the active time period overlaps a time domain position of the measurement gap, the foregoing method can be used to flexibly indicate an operation that needs to be performed by the terminal device in a DRX mechanism, to prevent delaying transmission of data with a high delay requirement in the DRX mechanism or delaying mobile cell handover of the terminal device.

According to a fourth aspect, a communication apparatus is provided. The apparatus includes: an interface unit, configured to receive configuration information, where the configuration information is for configuring a measurement gap, the measurement gap is for reference signal measurement, and a time domain position of the measurement gap overlaps a time domain position of information transmission; and a processing unit, configured to: when a priority of the information transmission is higher than a priority of the measurement gap, control the apparatus to perform the information transmission.

For example, there may be one or more measurement gaps. If time domain positions of the plurality of measurement gaps overlap the time domain position of the information transmission, and the priority of the information transmission is higher than that of a measurement gap with a highest priority in the plurality of measurement gaps, the information transmission is performed.

Specifically, "when a priority of the information transmission is higher than a priority of the measurement gap" may also be expressed as "if a priority of the information transmission is higher than a priority of the measurement gap". In other words, "when a priority of the information transmission is higher than a priority of the measurement gap" is a prerequisite for "performing the information transmission". There may be no step or may be another step between "when a priority of the information transmission is higher than a priority of the measurement gap" and "performing the information transmission". This is not limited in this application.

For example, that a time domain position of the measurement gap overlaps a time domain position of information transmission may be that a time domain position of the measurement gap partially overlaps a time domain position of information transmission, or may be that a time domain position of the measurement gap completely overlaps a time domain position of information transmission. This is not limited in this application.

By way of example, and not limitation, the priority of the information transmission may be a priority of data transmission, or may be a priority of a signal, or may be a priority of a channel or a priority indicated by the channel.

Specifically, the measurement gap may be configured by using the following parameters: an MGRP, an MGL, a gapoffset, and the like.

When service data with a strict delay requirement needs to be transmitted, the foregoing method can be used to resolve a problem of an extra scheduling delay caused because data cannot be received or sent in the measurement gap, thereby improving service experience of a user.

With reference to the fourth aspect, in some implementations of the fourth aspect, that the processing unit is configured to: when a priority of the information transmission is higher than a priority of the measurement gap, control the apparatus to perform the information transmission includes: the processing unit is configured to: when the priority of the measurement gap is configured as a low priority, and the priority of the information transmission is configured as a high priority, control the apparatus to perform the information transmission.

Specifically, that the priority of the measurement gap is configured as a low priority may be implemented by including a configuration parameter in the configuration information. The configuration parameter indicates that the priority of the measurement gap is configured as a low priority.

By way of example, and not limitation, the configuration parameter is set to "low" or 0, indicating that the priority of the measurement gap is configured as a low priority.

Specifically, that the priority of the information transmission is configured as a high priority may be indicated by a priority index (priority index) of an uplink signal/channel or a downlink signal/channel.

By way of example, and not limitation, when a value of the priority index is 1, it indicates that the priority of the information transmission is configured as a high priority.

Data transmission is preferentially performed in the foregoing manner in which the priority of the information transmission is configured as a high priority and the priority of the measurement gap is configured as a low priority, thereby reducing impact of the reference signal measurement in the measurement gap on high-priority information transmission, and improving service performance.

With reference to the fourth aspect, in some implementations of the fourth aspect, that the processing unit is configured to: when a priority of the information transmission is higher than a priority of the measurement gap, control the apparatus to perform the information transmission includes: the processing unit is configured to: when the priority of the measurement gap is configured as a low priority, control the apparatus to perform the information transmission.

When the priority of the measurement gap is configured as a low priority, in the method, a priority of the reference signal measurement in the measurement gap is lower than the priority of the information transmission by default, ensuring normal information transmission to a greater extent.

With reference to the fourth aspect, in some implementations of the fourth aspect, the processing unit is further configured to: when the priority of the information transmission is lower than the priority of the measurement gap, control the apparatus to perform the reference signal measurement in the measurement gap.

Specifically, "when the priority of the information transmission is lower than the priority of the measurement gap" may also be expressed as "if the priority of the information transmission is lower than the priority of the measurement gap". In other words, "when the priority of the information transmission is lower than the priority of the measurement gap" is a prerequisite for "performing the reference signal measurement in the measurement gap". There may be no step or may be another step between "when the priority of the information transmission is lower than the priority of the measurement gap" and "performing the reference signal measurement in the measurement gap". This is not limited in this application.

Specifically, in this application, a reference signal may include a CSI-RS, an SSB, an SRS, a DMRS, and the like. It should be understood that the functions and specific examples of the reference signal that are listed above are merely examples for description, and shall not constitute any limitation on this application. This application does not exclude a possibility of defining a reference signal with another function or purpose in a future protocol.

When service data without a strict delay requirement needs to be transmitted, the reference signal measurement may be preferentially performed in the measurement gap by using the foregoing method, so that timely handover of a high mobility terminal device can be ensured.

With reference to the fourth aspect, in some implementations of the fourth aspect, that the processing unit is further configured to: when the priority of the information transmission is lower than the priority of the measurement gap, control the apparatus to perform the reference signal measurement in the measurement gap includes: the processing unit is further configured to: when the priority of the measurement gap is configured as a high priority, or the priority of the information transmission is configured as a low priority, control the apparatus to perform the reference signal measurement in the measurement gap.

Specifically, that the priority of the measurement gap is configured as a high priority may be implemented by including a configuration parameter in the configuration information. The configuration parameter indicates that the priority of the measurement gap is configured as a high priority.

By way of example, and not limitation, the configuration parameter is set to "high" or 1, indicating that the priority of the measurement gap is configured as a high priority.

Specifically, that the priority of the information transmission is configured as a low priority may be indicated by a priority index (priority index) of an uplink signal/channel or a downlink signal/channel.

By way of example, and not limitation, when a value of the priority index is 0, it indicates that the priority of the information transmission is configured as a low priority.

The reference signal measurement is preferentially performed in the measurement gap in the foregoing manner in which the priority of the information transmission is configured as a low priority or the priority of the measurement gap is configured as a high priority, thereby reducing impact of low-priority information transmission on the reference signal measurement in the measurement gap, or reducing impact of information transmission on reference signal measurement in a high-priority measurement gap.

With reference to the fourth aspect, in some implementations of the fourth aspect, the information transmission includes information transmission in a DRX active time period.

The DRX active time period includes at least one of a running time period of an inactivity timer (drx-Inactivity timer), a running time period of an uplink retransmission timer (drx-Retransmission Timer UL), and a running time period of a downlink retransmission timer (drx-Retransmission Timer DL).

Specifically, the running time period indicates an actual working time period, and the running time period is less than or equal to duration set by the timer.

When a time domain position of an active time period in a DRX mechanism overlaps the time domain position of the measurement gap, the foregoing method can be used to resolve a problem of an extra scheduling delay caused because data of the active time period in the DRX mechanism cannot be received or sent in the measurement gap, thereby improving the service experience of the user.

With reference to the fourth aspect, in some implementations of the fourth aspect, the priority of the information transmission is determined based on a priority indicated by a physical channel, and the physical channel is associated with the DRX active time period.

By way of example, and not limitation, the physical channel may be a PUCCH, a PUSCH, a PDCCH, a PDSCH, or the like.

For example, if the terminal device obtains the PDCCH through monitoring in a wake-up time period (on duration), the terminal device needs to start the inactivity timer (drx-Inactivity timer), and perform information or data transmission based on indication information of the PDCCH. The terminal device continues to monitor the PDCCH in the running time period of the inactivity timer (drx-Inactivity timer), and receives or transmits data that may arrive. A priority of the information or data transmission in the running time period of the inactivity timer (drx-Inactivity timer) after the PDCCH is obtained through monitoring may be determined based on a field that indicates a priority and that is carried in the PDCCH obtained through monitoring.

By way of example, and not limitation, when a value of a priority index carried in the PDCCH obtained through monitoring is 1, it indicates that the priority of the information or data transmission in the running time period of the drx-Inactivity timer is a high priority; and when the value of the priority index carried in the PDCCH obtained through monitoring is 0, it indicates that the priority of the information or data transmission in the running time period of the drx-Inactivity timer is a low priority.

Alternatively, when the foregoing PDCCH obtained through monitoring does not include the field indicating the priority, it may be considered by default that the priority of the information or data transmission in the running time period of the drx-Inactivity timer is a low priority.

The physical channel obtained through monitoring may indicate the priority of the information transmission in the DRX active time period, to ensure normal receiving and sending of important data or information in the DRX active time period, and improve the service performance.

With reference to the fourth aspect, in some implementations of the fourth aspect, the configuration information includes a parameter, and the parameter is for configuring the measurement gap as a high-priority measurement gap or a low-priority measurement gap.

A priority level of each measurement gap is directly configured, so that the terminal device can accurately determine, based on a priority of a current measurement gap and a priority of current information transmission, an operation that needs to be performed, to prevent impact on data transmission of a time-critical service.

With reference to the fourth aspect, in some implementations of the fourth aspect, the configuration information includes a threshold, and the threshold is for determining the measurement gap as a high-priority measurement gap or a low-priority measurement gap.

For example, five measurement gaps are configured for the terminal device, and gapPriority-r17 values of the five measurement gaps are respectively set to a value2, a value3, a value4, a value5, and a value6. If value2 > value3 > value4 > value5 > value6, when a threshold (gapPriorityThreshold) is the value4, it may be determined that two measurement gaps whose gapPriority-r17 values are the value2 and the value3 have high priorities, and two measurement gaps whose gapPriority-r17 values are the value5 and the value6 have low priorities.

Alternatively, if value2 < value3 < value4 < value5 < value6, when the threshold (gapPriorityThreshold) is the value4, it may be determined that two measurement gaps whose gapPriority-r17 values are the value2 and the value3 have low priorities, and two measurement gaps whose gapPriority-r17 values are the value5 and the value6 have high priorities.

A high-priority measurement gap or a low-priority measurement gap in the plurality of measurement gaps may be directly determined by configuring the threshold. In this method, a threshold may be adjusted to control whether a measurement gap has a high priority or a low priority, and flexibility is higher.

According to a fifth aspect, a communication apparatus is provided. The apparatus may be a terminal device, or may be a component (for example, a processor, a chip, or a chip system) of the terminal device, or may be a logical module or software that can implement all or some functions of the terminal device. The apparatus has functions of implementing the first aspect, the second aspect, the third aspect, and the various possible implementations of the first aspect, the second aspect, and the third aspect. The functions may be implemented by hardware, or may be implemented by hardware executing corresponding software. The hardware or software includes one or more modules corresponding to the functions.

In a possible design, the apparatus includes an interface unit and a processing unit. The interface unit may be at least one of a transceiver, a receiver, and a transmitter. The interface unit may include a radio frequency circuit or an antenna. The processing unit may be a processor. Optionally, the apparatus may further include a storage unit, and the storage unit may be, for example, a memory. When the apparatus includes the storage unit, the storage unit is configured to store a program or instructions. The processing unit is connected to the storage unit, and the processing unit may execute the program or the instructions stored in the storage unit, or instructions from another source, so that the apparatus performs the communication methods in the first aspect, the second aspect, the third aspect, and the various possible implementations of the first aspect, the second aspect, and the third aspect. In this design, the apparatus may be a terminal device.

In another possible design, when the apparatus is a chip, the chip includes an interface unit and a processing unit. The interface unit may be, for example, an input/output interface, a pin, or a circuit on the chip. The processing unit may be, for example, a processor. The processing unit may execute instructions, so that the chip in an access network device performs the communication method according to any one of the first aspect, the second aspect, the third aspect, and the possible implementations of the first aspect, the second aspect, and the third aspect. Optionally, the processing unit may execute the instructions in the storage unit, and the storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

The processor mentioned anywhere above may be a general-purpose central processing unit (CPU), a microprocessor, an application-specific integrated circuit (application-specific integrated circuit, ASIC), or one or more integrated circuits configured to control program execution of the communication methods according to the foregoing aspects.

According to a sixth aspect, a computer storage medium is provided. The computer storage medium stores program code. The program code indicates instructions for performing the methods in any one of the first aspect, the second aspect, the third aspect, and the possible implementations of the first aspect, the second aspect, and the third aspect.

According to a seventh aspect, a computer program product including computer instructions or computer code is provided. When the computer program product is run on a computer, the computer is enabled to perform the methods in any one of the first aspect, the second aspect, the third aspect, and the possible implementations of the first aspect, the second aspect, and the third aspect.

According to an eighth aspect, a communication system is provided. The communication system includes an apparatus that has functions of implementing the method and various possible designs of the first aspect, an apparatus that has functions of implementing the method and various possible designs of the second aspect, and an apparatus that has functions of implementing the method and various possible designs of the third aspect. The apparatus that has functions of implementing the methods in the first aspect, the second aspect, the third aspect, and various possible designs of the first aspect, the second aspect, and the third aspect may be a terminal device.

Specifically, for beneficial effects of other aspects, refer to the beneficial effects described in the first aspect, the second aspect, and the third aspect.

Based on the foregoing technical solutions, when service data with a strict delay requirement needs to be transmitted, a problem of an extra scheduling delay caused because data cannot be received or sent in the measurement gap can be resolved, thereby improving service experience of a user.

### BRIEF DESCRIPTION OF DRAWINGS

FIG. 1 is a diagram of an application scenario according to this application;
FIG. 2 is a diagram of an MG configuration according to this application;
FIG. 3 is a diagram in which an MG and data transmission overlap in time domain according to this application;
FIG. 4 is a schematic flowchart of a priority-based data transmission method according to this application;
FIG. 5 is a diagram of configuring a gapoffset of an MG by a network device according to this application;
FIG. 6 is a diagram of a DRX scenario according to this application;
FIG. 7 is a diagram of downlink retransmitted data according to this application;
FIG. 8 is a diagram of uplink retransmitted data according to this application;
FIG. 9 is a schematic flowchart of another priority-based data transmission method according to this application;
FIG. 10 is a schematic flowchart of another priority-based data transmission method according to this application;
FIG. 11 is a block diagram of an information sending apparatus 100 according to this application; and
FIG. 12 is a block diagram of an information receiving apparatus 200 according to this application.

### DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system.

By way of example, and not limitation, in embodiments of this application, the terminal device in embodiments of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a terminal device unit (subscriber unit), a terminal device station, a terminal device agent, a terminal device apparatus, or a terminal in V2X communication. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network or a terminal in a future evolved network, or the like. This is not limited in embodiments of this application.

The user equipment in embodiments of this application may alternatively be a mobile phone (mobile phone), a tablet computer (pad), a computer having a wireless transceiver function, a holographic projector, a video player, a virtual reality (virtual reality, VR) terminal, an augmented reality (augmented reality, AR) terminal, a wireless terminal in industrial control (industrial control), a tactile terminal device, a vehicle-mounted terminal device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), or a wireless terminal in a smart home (smart home)

The wearable device may also be referred to as a wearable intelligent device, and is a collective term of wearable devices such as a head-mounted display, XR glasses, gloves, a watch, clothing, and shoes, that are intelligently designed and developed for daily wear by using a wearable technology. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices that can implement all or some of functions without depending on smartphones, for example, smart watches or smart glasses, and include devices that are dedicated to one type of application function and need to be used together with other devices such as smartphones, for example, various smart bands or smart jewelry for monitoring physical signs.

In addition, in embodiments of this application, the terminal device may alternatively be a terminal device in an internet of things (internet of things, IoT) system. An IoT is an important part of future development of information technologies. A main technical feature of the IoT is to connect things to a network by using a communication technology, to implement an intelligent network with human-machine interconnection and thing-thing interconnection.

In addition, in this application, the terminal device may further include sensors such as an intelligent printer, a train detector, and a gas station. Main functions include collecting data (some terminal devices), receiving control information and downlink data from a network device, sending an electromagnetic wave, and transmitting uplink data to the network device.

In embodiments of this application, the network device may be a device that is configured to communicate with the terminal device, and the network device may be a base transceiver station (base transceiver station, BTS) in a global system for mobile communications (global system for mobile communications, GSM) system or code division multiple access (code division multiple access, CDMA), may be a NodeB (NodeB, NB) in a wideband code division multiple access (wideband code division multiple access, WCDMA) system, may be an evolved NodeB (evolved NodeB, eNB) in the LTE system, or may be a radio controller in a cloud radio access network (cloud radio access network, CRAN) scenario. Alternatively, the network device may be a relay station, an access point, a vehicle-mounted device, a wearable device, a network device in a 5G network and a future communication system, a network device in a future evolved PLMN network, or the like, may be an access point (access point, AP) in a WLAN, or may be a gNB in a new radio (new radio, NR) system. This is not limited in embodiments of this application. It may be understood that all or some functions of the network device in this application may alternatively be implemented by using a software function running on hardware, or may be implemented by using an instantiated virtualization function on a platform (for example, a cloud platform).

In addition, in embodiments of this application, an access network device serves a cell. The terminal device communicates with the access network device on a transmission resource (for example, a frequency domain resource, namely, a spectrum resource) for the cell. The cell may be a cell corresponding to the access network device (for example, a base station). The cell may belong to a macro base station, or a base station corresponding to a small cell (small cell). The small cell herein may include a metro cell (metro cell), a micro cell (micro cell), a pico cell (pico cell), a femto cell (femto cell), or the like. These small cells have features of small coverage and low transmit power, and are suitable for providing a high-rate data transmission service.

A core network device may be connected to a plurality of access network devices, configured to control the access network devices, and can distribute data received from a network side (for example, an internet) to the access network devices.

In addition, in this application, the network device may include a gNB (gNB), for example, a macro base station, a micro base station, an indoor hotspot, or a relay node, and has functions of: sending a radio wave to the terminal device, to implement downlink data transmission and control uplink transmission by sending scheduling information; and receiving a radio wave sent by the terminal device, to receive uplink data transmission.

The foregoing listed functions and specific implementations of the terminal device, the access network device, and the core network device are merely examples for description, and this application is not limited thereto.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution entity of a method provided in embodiments of this application is not particularly limited in embodiments of this application, provided that a program that records code of the method provided in embodiments of this application can be run to perform communication according to the method provided in embodiments of this application. For example, the execution entity of the method provided in embodiments of this application may be the terminal device or the network device, or a functional module that can invoke and execute the program in the terminal device or the network device.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, include, and/or carry instructions and/or data.

It should be noted that in embodiments of this application, a plurality of applications may be run at the application layer. In this case, an application for performing the communication method in embodiments of this application and an application configured to control a receive-end device to implement an action corresponding to received data may be different applications.

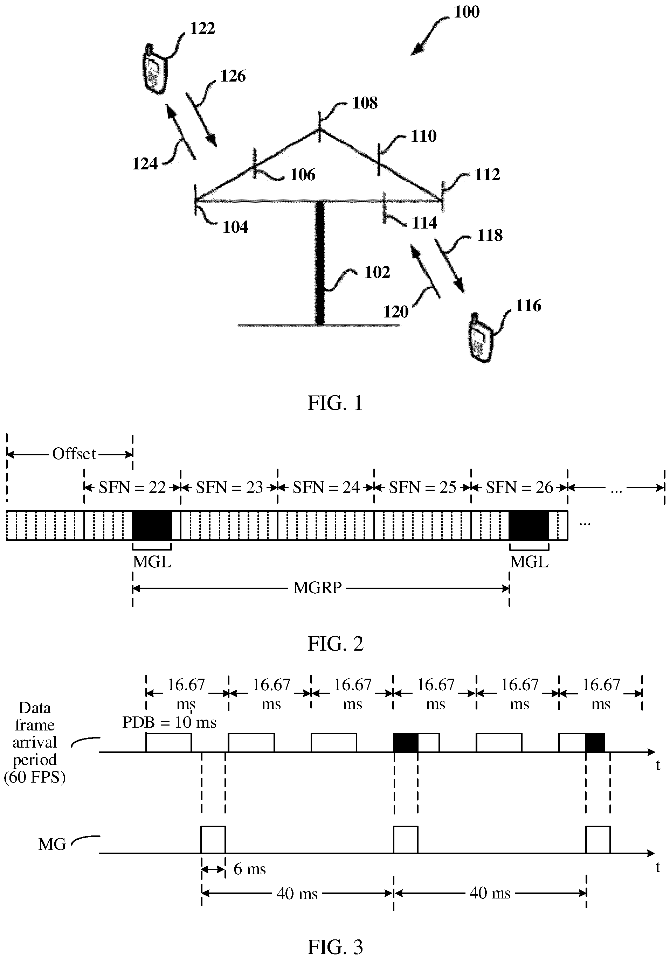

FIG. 1 is a diagram of a system 100 applicable to a communication method according to an embodiment of this application. As shown in FIG. 1, the system 100 includes an access network device 102. The access network device 102 may include one or more antennas, for example, antennas 104, 106, 108, 110, 112, and 114. In addition, the access network device 102 may additionally include a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving.

The access network device 102 may communicate with a plurality of terminal devices (for example, a terminal device 116 and a terminal device 122). However, it may be understood that the access network device 102 may communicate with any quantity of terminal devices that are similar to the terminal device 116 or the terminal device 122. The terminal devices 116 and 122 may be, for example, a head mounted display, XR glasses, a VR terminal, a cellular phone, a smartphone, a portable computer, a handheld communication device, a handheld computing device, a satellite radio apparatus, a global positioning system, a PDA, and/or any other suitable device configured to perform communication in the wireless communication system 100.

As shown in FIG. 1, the terminal device 116 communicates with the antennas 112 and 114. The antennas 112 and 114 send information to the terminal device 116 over a forward link (also referred to as a downlink link) 118, and receive information from the terminal device 116 over a reverse link (also referred to as an uplink link) 120. In addition, the terminal device 122 communicates with the antennas 104 and 106. The antennas 104 and 106 send information to the terminal device 122 over a forward link 124, and receive information from the terminal device 122 over a reverse link 126.

Each antenna (or an antenna group including a plurality of antennas) and/or area designed for communication are/is referred to as a sector of the access network device 102. For example, an antenna group may be designed to communicate with a terminal device in a sector within a coverage area of the access network device 102. The access network device may send signals to all terminal devices in a corresponding sector by using a single antenna or a multi-antenna transmit diversity. In a process in which the access network device 102 communicates with the terminal devices 116 and 122 separately over the forward links 118 and 124, a transmit antenna of the access network device 102 may improve signal-to-noise ratios of the forward links 118 and 124 by beamforming. In addition, compared with a manner in which the access network device uses a single-antenna or a multi-antenna transmit diversity to transmit signals to all terminal devices served by the access network device, when the access network device 102 uses beamforming to transmit signals to the terminal devices 116 and 122 that are randomly scattered in a related coverage area, interference to a mobile device in a neighboring cell is less.

In a given period of time, the access network device 102, the terminal device 116, or the terminal device 122 may be a wireless communication sending apparatus and/or a wireless communication receiving apparatus. When sending data, the wireless communication sending apparatus may encode data for transmission. Specifically, the wireless communication sending apparatus may obtain (for example, generate, receive from another communication apparatus, or store in a memory) a specific quantity of data bits to be transmitted to the wireless communication receiving apparatus through a channel. The data bits may be included in a transport block (or a plurality of transport blocks) of data, and the transport block may be segmented to generate a plurality of code blocks.

In addition, the communication system 100 may be a PLMN network, a device-to-device (device-to-device, D2D) network, a machine-to-machine (machine-to-machine, M2M) network, an IoT network, or another network. FIG. 1 is merely a simplified diagram of an example. The network may further include another access network device not shown in FIG. 1.

In embodiments of this application, the data or information may be carried by using a time-frequency resource. The time-frequency resource may include a resource in time domain and a resource in frequency domain. In time domain, the time-frequency resource may include one or more time units.

One time unit may be one symbol, one mini-slot (mini-slot), one slot (slot), or one subframe (subframe). Duration of one subframe in time domain may be 1 millisecond (ms). One slot includes 7 or 14 symbols. One mini-slot may include at least one symbol (for example, 2 symbols, 4 symbols, 7 symbols, or any quantity of symbols fewer than or equal to 14 symbols).

In a communication system, for example, a 5G system, to resist a path loss in a high frequency scenario, two communication devices that have a communication connection may obtain gains through beamforming (beamforming) separately. A transmit end (for example, a network device) and a receive end (for example, a terminal device) may obtain a pairing relationship between a transmission beam and a reception beam through beam (beam) training.

The beam may be understood as a spatial filter (spatial filter) or a spatial parameter (spatial parameter). A beam for sending a signal may be referred to as a transmission beam (transmission beam, Tx beam), and may be a spatial domain transmit filter (spatial domain transmit filter) or a spatial domain transmit parameter (spatial domain transmit parameter). A beam for receiving a signal may be referred to as a reception beam (reception beam, Rx beam), and may be a spatial domain receive filter (spatial domain receive filter) or a spatial domain receive parameter (spatial domain receive parameter).

A technology for forming the beam may be a beamforming technology or another technology. For example, the beamforming technology may be specifically a digital beamforming technology, an analog beamforming technology, a hybrid digital/analog beamforming technology, or the like. The transmission beam may refer to signal strength distribution formed in different directions in space after a signal is transmitted through an antenna, and the reception beam may refer to signal strength distribution in different directions in space of a radio signal received from an antenna.

In an NR protocol, the beam may be, for example, a spatial filter (spatial filter). However, it should be understood that this application does not exclude a possibility of defining another term in a future protocol to represent a same or similar meaning.

A beam pairing relationship is a pairing relationship between the transmission beam and the reception beam, that is, a pairing relationship between the spatial domain transmit filter and the spatial domain receive filter. A large beamforming gain can be obtained through transmission of a signal between a transmission beam and a reception beam that have a beam pairing relationship.

In an implementation, the transmit end may transmit a reference signal through beam sweeping, and the receive end may also receive a reference signal through beam sweeping. Specifically, the transmit end may form different directional beams in space in a beamforming manner, and may perform polling on a plurality of different directional beams, to transmit a reference signal through the different directional beams, so that power of transmitting the reference signal can reach a maximum value in a direction directed by a transmit beam. The receive end may also form different directional beams in space in the beamforming manner, and may perform polling on a plurality of different directional beams, to receive a reference signal through the different directional beams, so that power of receiving the reference signal by the receive end can reach a maximum value in a direction directed by a reception beam.

The receive end may perform channel measurement based on the received reference signal by traversing transmission beams and reception beams, and report a measurement result to the transmit end. For example, the receive end may report some reference signal resources with large reference signal received power (reference signal received power, RSRP) to the transmit end, for example, report an identifier of a reference signal resource, so that the transmit end transmits and receives a signal based on a beam pairing relationship with good channel quality during data or signaling transmission.

In this application, the reference signal may include, for example, a channel state information reference signal (channel state information reference signal, CSI-RS), a synchronization signal block (synchronization signal block, SSB), a sounding reference signal (sounding reference signal, SRS), and a demodulation reference signal (demodulation reference signal, DMRS). Configuration information of the reference signal resource may be for configuring a transmission attribute of the reference signal. For example, the reference signal resource in this embodiment of this application may include a CSI-RS resource (resource), an SSB resource (SS/PBCH Block resource), and the like. Correspondingly, the identifier of the reference signal resource may include, for example, a CSI-RS resource indicator (CSI-RS resource indicator, CRI), an SSB resource indicator (SSB resource indicator, SSBRI), and an SRS resource indicator (SRS resource indicator). It should be understood that the functions and specific examples of the reference signal that are listed above are merely examples for description, and shall not constitute any limitation on this application. This application does not exclude a possibility of defining a downlink reference signal with another function or purpose in a future protocol.

In a mobile cellular network, when the terminal device 116 moves from a cell covered by the access network device 102 to a neighboring cell covered by another access network device, handover needs to be performed between the cells. Before the handover, the terminal device 116 measures a signal of the neighboring cell based on a reference signal sent by the neighboring cell to the terminal device 116, to determine when to perform the handover.

Specifically, a manner in which the terminal device measures the signal of the neighboring cell based on the reference signal may be classified into intra-frequency measurement (intra-frequency measurement) and inter-frequency measurement (inter-frequency measurement). The intra-frequency measurement means that a cell in which the terminal device is currently located and a to-be-measured target cell are on a same carrier frequency (or referred to as a center frequency). In this case, the terminal device may perform the measurement by using the reference signal inserted during data transmission, without affecting data transmission and reception. The inter-frequency measurement means that the cell in which the terminal device is currently located and the to-be-measured target cell (which may also be the foregoing neighboring cell) are on different carrier frequencies. A measurement gap (measurement gap, MG) is used for the inter-frequency measurement to measure a signal of the target cell. However, during the inter-frequency measurement, time of the MG may conflict with time of service data transmission, affecting service experience of a user.

Specifically, the MG may reserve a part of time. In this time period, UE does not send or receive data. Instead, the UE adjusts a radio frequency receiver to a frequency of the target cell to perform the inter-frequency measurement of the target cell. The reserved time is MG time. When the MG time ends, the receiver is re-adjusted to the current cell.

To be specific, duration in which the terminal device suspends communication with the current cell to measure the signal of the neighboring cell is referred to as an MG.

The following describes a configuration parameter of the MG as an example. It should be noted that the following specific value of the configuration parameter of the MG is merely an example, and the specific value of the configuration parameter of the MG is not limited in this application.

### 1. Measurement gap repetition period (measurement gap repetition period, MGRP)

The MGRP is for determining a period of the MG. Specifically, the MGRP may be 20 ms, 40 ms, 80 ms, or 160 ms. For example, as shown in FIG. 2, within 40 ms, the MG repeats every four frames.

### 2. Measurement gap length (measurement gap length, MGL)

The MGL is for determining duration of the MG. Specifically, the MGL may be 1.5 ms, 3 ms, 3.5 ms, 4 ms, 5.5 ms, or 6 ms. For example, as shown in FIG. 2, the duration of the MG is 4 ms.

For example, for a service including positioning measurement, the MGL may be 10 ms or 20 ms.

### 3. Gapoffset (gapoffset)

The gapoffset is for determining a start subframe number (subframe number, SFN) at which the MG starts. Generally, a value range of the gapoffset is 0 ≤ gapoffset ≤ MGRP-1. For example, if the MGRP is 20 ms, the range of the gapoffset is 0 ≤ gapoffset ≤ 19. The gapoffset can have about 160 values, but not all values are applicable to all MGRPs. For example, as shown in FIG. 2, the gapoffset may be 13 ms.

Some measurement gap patterns are predefined, so that the UE may notify, based on UE capability reporting information, a base station of UE-supported measurement gap patterns (supported measurement gap patterns). Each MG pattern may include the configuration parameter of the MG, and a common MG pattern (MG pattern) is shown in Table 1.

**Table 1**

| MG pattern id | MGL (ms) | MGPR (ms) |
|---|---|---|
| 0 | 6 | 40 |
| 1 | 6 | 80 |
| 2 | 3 | 40 |
| 3 | 3 | 80 |
| 4 | 6 | 20 |
| 5 | 6 | 160 |
| 6 | 4 | 20 |
| 7 | 4 | 40 |
| 8 | 4 | 80 |
| 9 | 4 | 160 |
| 10 | 3 | 20 |
| 11 | 3 | 160 |
| 12 | 5.5 | 20 |
| 13 | 5.5 | 40 |
| 14 | 5.5 | 80 |
| 15 | 5.5 | 160 |
| 16 | 3.5 | 20 |
| 17 | 3.5 | 40 |
| 18 | 3.5 | 80 |
| 19 | 3.5 | 160 |
| 20 | 1.5 | 20 |
| 21 | 1.5 | 40 |
| 22 | 1.5 | 80 |
| 23 | 1.5 | 160 |
| 24 | 10 | 80 |
| 25 | 20 | 160 |

The terminal device may notify, based on a capability of the terminal device, the network device of an MG pattern supported by the terminal device.

The foregoing MG pattern 0 and MG pattern 1 are supported by the capability of the terminal device, and the other MG patterns are optionally supported by the capability of the terminal device.

The following describes in detail the technical solutions of this application by using an XR service as an example in this application. It should be further understood that all services applicable to the technical solutions of this application fall within the protection scope of this application.

In the XR service, if a transmission period of video data of the XR service is 30 frames per second (frame per second, FPS), 60 FPS, and 90 FPS, frame arrival periods of the video data are 1/30s, 1/60s (namely, 16.67 ms), and 1/90s respectively. As shown in FIG. 3, a packet delay budget (packet delay budget, PDB) is 10 ms, and after a video frame arrives, transmission needs to be completed within the 10 ms.

For example, when the video data of the XR service is transmitted at a rate of 60 FPS, and the MG configured by the terminal device is the MG pattern 0, a transmission period of data of the XR service in the PDB cannot match a period of the MG. Therefore, the transmission period of the data of the XR service overlaps (overlapped) or conflicts with the period of the MG. Black parts in FIG. 3 are parts where the transmission of the video data of the XR service overlaps the MG. In this case, transmission of data of two frames in every six frames in FIG. 3 is affected, and consequently, a data transmission capacity of the XR service decreases significantly. This situation has great impact on data transmission of an XR service with a high delay requirement, a service with low mobility and high importance of transmitted data, and a service with a positioning measurement requirement. As a result, an extra data scheduling delay is generated because the terminal device cannot receive or send data in the MG.

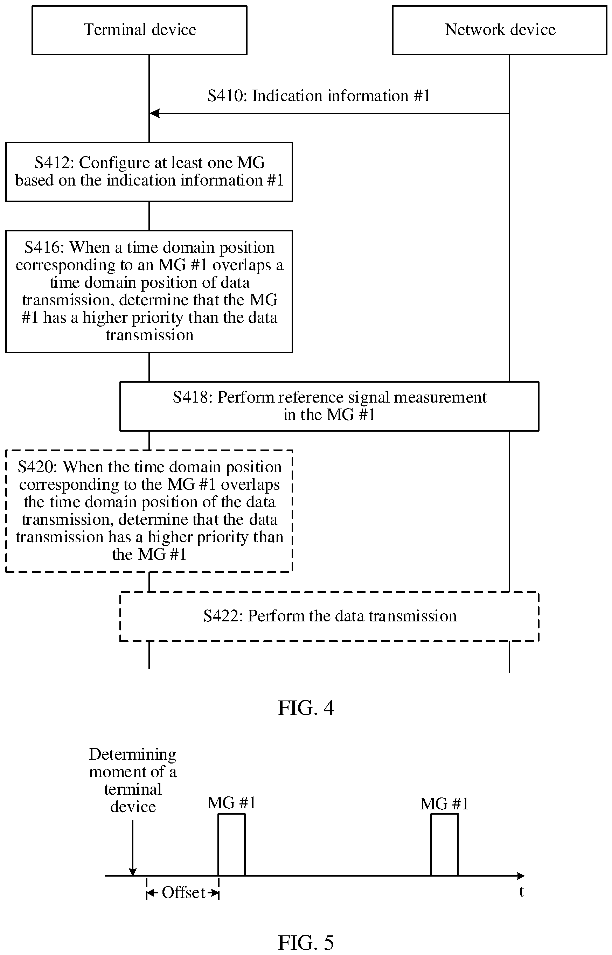

An embodiment of this application provides a priority-based transmission method, as shown in FIG. 4.

It needs to be noted that in FIG. 4, the method is illustrated by using an example in which a terminal device and a network device are used as execution entities of interaction illustration. However, the execution entities of the interaction illustration are not limited in this application. For example, the network device in FIG. 4 may alternatively be a chip, a chip system, or a processor that supports the network device in implementing the method, or may be a logical module or software that can implement all or some functions of the network device. The terminal device in FIG. 4 may alternatively be a chip, a chip system, or a processor that supports the terminal device in implementing the method, or may be a logical module or software that can implement all or some functions of the terminal device.

Step S410: The network device sends indication information #1 to the terminal device, where the indication information #1 indicates the terminal device to configure at least one MG, and the indication information #1 includes a priority parameter of each MG in the at least one MG. The terminal device receives the indication information #1.

Step S412: The terminal device configures at least one MG based on the indication information #1.

Step S414: The terminal device determines whether a time domain position of current data transmission overlaps a time domain position of a measurement gap corresponding to an MG #1.

Specifically, the MG #1 may be an MG with a high priority selected by the terminal device from the at least one MG.

Step S416 and step S418: If the terminal device determines that the time domain position of the current data transmission overlaps the position of the measurement gap corresponding to the MG #1 in time domain, the terminal device may further determine priorities of the MG #1 and the current data transmission.

Specifically, when the data transmission overlaps the MG #1 in time domain, if the MG #1 has a higher priority than the data transmission, reference signal measurement in the MG #1 is preferentially performed; or if the data transmission has a higher priority than the MG #1, the data transmission is preferentially performed.

It should be understood that the data transmission may not only represent uplink data transmission, but also represent downlink data transmission.

In addition, the priority of the data transmission may also indicate a priority of a signal or a priority of a channel.

Specifically, methods for determining whether the MG has a high priority or a low priority are as follows:
Method 1: A new priority parameter (for example, indicated as gapPriorityIndex) is introduced into a configuration parameter of the MG.

For example, if the gapPriorityIndex is configured as "high", it indicates that the MG has a high priority; or if the gapPriorityIndex is configured as "low", it indicates that the MG has a low priority. The gapPriorityIndex may alternatively be configured as another specific value to indicate that the MG has a high priority or a low priority. This is not limited in this application.

It should be noted that the gapPriorityIndex is merely an example for describing the priority parameter in this application, and a specific name of the priority parameter is not limited in this application.

Method 2: If a configuration parameter gapPriority-r17 of the MG is configured as a "value1", it indicates that the MG has a high priority. If the configuration parameter of the MG is configured as a "value2", it indicates that the MG has a low priority.

The gapPriority-r17 may alternatively be configured as another specific value to indicate that the MG has a high priority or a low priority. This is not limited in this application.

It should be noted that the gapPriority-r17 is merely an example for describing the priority parameter in this application, and a specific name of the priority parameter is not limited in this application.

Method 3: A new threshold parameter (for example, indicated as gapPriorityThreshold) is introduced into a configuration parameter of the MG.

For example, if a value of a configuration parameter gapPriority-r17 is greater than the gapPriorityThreshold, it indicates that the MG has a high priority; or if the value of the configuration parameter gapPriority-r17 is less than the gapPriorityThreshold, it indicates that the MG has a low priority.

If the terminal device configures a plurality of MGs, the terminal device may determine, based on priorities, an MG #1 with a highest priority for execution. The MG #1 may be an MG with a highest priority in a plurality of MGs that are determined to have high priorities, or the MG #1 may be an MG with a highest priority in a plurality of MGs that are determined to have low priorities.

For example, if the terminal device configures five MGs, gapPriority-r17 of the five MGs are configured as a value2, a value3, a value4, a value5, and a value6, respectively. If value2 > value3 > value4 > value5 > value6, when gapPriorityThreshold is the value4, it may be determined that two MGs whose gapPriority-r17 are configured as the value 2 and the value 3 have high priorities, and two MGs whose gapPriority-r17 are configured as the value 5 and the value 6 have low priorities.

Alternatively, if value2 < value3 < value4 < value5 < value6, when the threshold (gapPriorityThreshold) is the value4, it may be determined that two measurement gaps whose gapPriority-r17 values are the value2 and the value3 have low priorities, and two measurement gaps whose gapPriority-r17 values are the value5 and the value6 have high priorities.

It should be noted that the gapPriorityThreshold is merely an example for describing the threshold parameter in this application, and a specific name of the threshold parameter is not limited in this application.

Specifically, a set value of the configuration parameter of the MG in the foregoing three methods may be carried in the indication information #1 sent by the network device to the terminal device.

Specifically, methods for determining whether data transmission has a high priority or a low priority are as follows:
Method 1: Physical layer determining method.

For example, when a value of a priority index (priority index) of an uplink channel, an uplink signal, a downlink channel, or a downlink signal is 1, it indicates that the uplink channel, the uplink signal, the downlink channel, or the downlink signal has a high priority; or when the value of the priority index (priority index) of the uplink channel, the uplink signal, the downlink channel, or the downlink signal is 0, it indicates that the uplink channel, the uplink signal, the downlink channel, or the downlink signal has a low priority.

For example, the uplink channel may be a physical uplink control channel (physical uplink control channel, PUCCH), a physical uplink shared channel (physical uplink shared channel, PUSCH), or the like; and the downlink channel may be a physical downlink control channel (physical downlink control channel, PDCCH), a physical downlink shared channel (physical downlink shared channel, PDSCH), or the like.

Specifically, the priority index of the uplink channel, the uplink signal, the downlink channel, or the downlink signal that indicates a high priority or a low priority may be another specific value. This is not limited in this application.

For example, for PUSCH transmission of a configured grant (configured grant, CG), the terminal device may obtain a value of a priority index from a higher-layer configuration parameter phy-PriorityIndex of the CG. For PUCCH transmission that carries HARQ feedback information of a PDSCH in semi-persistent scheduling (semi-persistent scheduling, SPS), the terminal device may obtain a value of a priority index from a higher-layer configuration parameter harq-CodebookID of the SPS. For PUCCH transmission carrying a scheduling request (scheduling request, SR), the terminal device may obtain a value of a priority index from a higher-layer configuration parameter phy-PriorityIndex of the SR. For PUSCH transmission that carries channel state information (Channel State Information, CSI), the terminal device may obtain a value of a priority index from a priority indication field in downlink control information (Downlink Control Information, DCI) that activates CSI reporting. For dynamically scheduled PUSCH and PDSCH transmission, the terminal device may schedule a priority indication field in DCI of the PUSCH and the PDSCH to obtain a value of a priority index. For PDCCH transmission, the terminal device may obtain a value of a priority index from a priority indication field carried in DCI of the PDCCH.

For the foregoing cases, if there is no corresponding priority indication field in the higher-layer configuration parameter or the DCI, the value of the priority index is 0 by default.

Method 2: Media access control (media access control, MAC) layer determining method.

When a highest priority of a logical channel carried in a MAC layer protocol data unit (protocol data unit, PDU) is higher than a configured higher-layer threshold parameter (gapPriorityThreshold), or the PDU includes a high-priority MAC control element (control unit, CE), it indicates that the MAC layer PDU has a high priority. When the highest priority of the logical channel carried in the MAC layer PDU is lower than the configured higher-layer threshold parameter (gapPriorityThreshold), and the PDU does not include a high-priority MAC CE, it indicates that the MAC layer PDU has a low priority.

For example, the terminal device may obtain a priority of the logical channel in the PDU from a higher-layer configuration parameter Priority of the logical channel in the PDU. The high-priority MAC CE is specified in a protocol, and is configured in programs of the terminal device and a base station device before delivery of the terminal device and the base station device. The high-priority MAC CE includes, but is not limited to, a configured grant confirmation (Configured Grant Confirmation) MAC CE, a buffer status report (Buffer Status Report, BSR) MAC CE, a timing advance report (Timing Advance Report) MAC CE, and the like.

It should be noted that the MAC layer determining method in Method 2 is applicable to priority determining when an uplink MAC layer PDU is sent.

Specifically, a set value of a higher-layer threshold parameter may be indicated by the network device to the terminal device.

When the terminal device determines whether the MG has a high priority or a low priority, and determines whether the data transmission has a high priority or a low priority, a rule for the terminal device to determine an execution sequence of the MG #1 and the data transmission may be: high-priority MG #1 > high-priority data transmission > low-priority MG #1 > low-priority data transmission.

For example, the terminal device determines, based on the foregoing method for determining whether the MG has a high priority or a low priority, that the MG #1 has a high priority, and determines, based on the method for determining whether the data transmission has a high priority or a low priority, that the data transmission also has a high priority. When the MG #1 overlaps the data transmission in time domain, MG #1 measurement is preferentially performed.

Similarly, the terminal device determines, based on the foregoing method for determining whether the MG has a high priority or a low priority, that the MG #1 has a low priority, and determines, based on the method for determining whether the data transmission has a high priority or a low priority, that the data transmission also has a low priority. When the MG #1 overlaps the data transmission in time domain, MG #1 measurement is preferentially performed.

Alternatively, the terminal device determines, based on the foregoing method for determining whether the MG has a high priority or a low priority, that the MG #1 has a high priority, and determines, based on the method for determining whether the data transmission has a high priority or a low priority, that the data transmission has a low priority. When the MG #1 overlaps the data transmission in time domain, MG #1 measurement is preferentially performed.

Alternatively, in step S420 and step S422, the terminal device determines, based on the foregoing method for determining whether the MG has a high priority or a low priority, that the MG #1 has a low priority, and determines, based on the method for determining whether the data transmission has a high priority or a low priority, that the data transmission has a high priority. When the MG #1 overlaps the data transmission in time domain, the data transmission is preferentially performed. In this case, it may also be considered that the MG #1 is deactivated.

A time interval between a start moment of the MG #1 and a moment at which the terminal device determines the priorities of the MG #1 and the data transmission cannot be excessively short. For example, when the terminal device performs measurement of an inter-frequency cell, the terminal device needs to perform carrier frequency handover. When the terminal device determines to preferentially perform MG #1 measurement of the inter-frequency cell, because a delay needs to be processed during the carrier frequency handover, the network device may configure an offset (MG_offset) for the terminal device. As shown in FIG. 5, if a time interval between a determining moment of the terminal device and a start moment of the MG #1 is greater than or equal to the offset, the terminal device determines, based on a determining result, whether to activate the MG #1; otherwise, the terminal device normally performs the MG #1 measurement.

When the MG measurement conflicts with the data transmission in time domain, by using the foregoing priority determining-based transmission method, impact of the MG measurement on a time-critical service can be reduced, and service performance can be improved.

The method in this application is also applicable to a communication system that can use a discontinuous reception (discontinuous reception, DRX) mechanism.

DRX enables the terminal device to periodically enter a sleep mode (sleep mode) at some time, not monitor a physical downlink control channel (physical downlink control channel, PDCCH), and wake up (wake up) when monitoring is required. In this way, UE can save power.

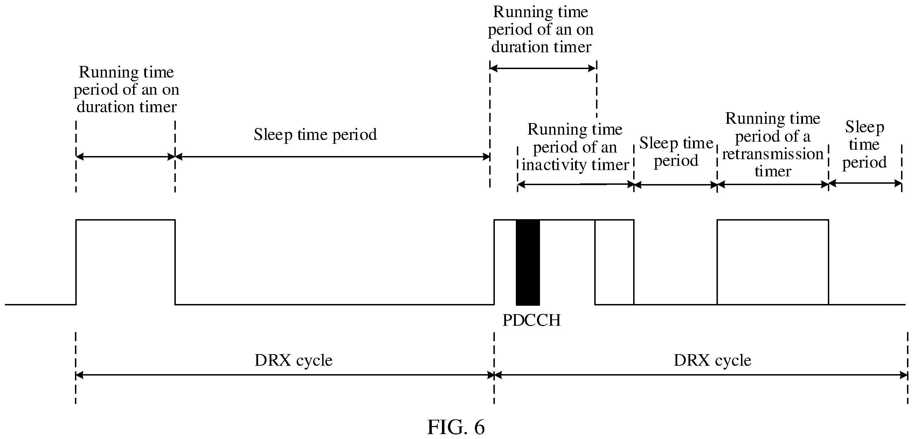

FIG. 6 shows a typical DRX cycle. As shown in FIG. 6, in this application, one DRX cycle may include a wake-up time period (on duration) and a sleep time period.

The terminal device may communicate with the network device in an active time period.

As shown in FIG. 6, in the on duration, the terminal device obtains a downlink PDCCH subframe through monitoring. In this time period, the terminal device is in a wake up mode.

The sleep time period may also be referred to as an opportunity for DRX (Opportunity for DRX) time period. The terminal device may not perform data transmission in the sleep time period.

As shown in FIG. 6, in the Opportunity for DRX time period, to save power, the UE enters sleep and does not monitor a PDCCH subframe.

It can be learned from FIG. 6 that, longer time for DRX sleep indicates lower power consumption of the UE, but correspondingly indicates an increased service transmission delay.

In the DRX mechanism, the terminal device may receive downlink data and an uplink grant in the active time period. In addition, the terminal device may perform DRX cycling based on a paging cycle in an idle mode. Alternatively, the terminal device may use a plurality of types of timers to cooperate in a radio resource control (Radio Resource Control, RRC) connected mode, to ensure receiving of the downlink data and the uplink grant. Subsequently, the foregoing timers are described in detail.

A large amount of communicated data inevitably causes a sharp increase in power consumption. Consequently, a battery supply is insufficient, or heat dissipation is increased due to the increase in the power consumption, causing a system running fault. Usage of the DRX function greatly reduces power consumption.

In this application, a DRX function control entity may be located at a media access control (media access control, MAC) layer of a protocol stack, and a main function of the DRX function control entity is to control sending instructions to a physical layer, to notify the physical layer to monitor a PDCCH at specific time and to remain in the sleep mode without turning on a receive antenna in other time.

By way of example, and not limitation, in this application, the DRX cycle may include a short DRX cycle and a long DRX cycle.

Specifically, as described above, one DRX cycle is equal to a sum of the wake-up time period (on duration) and the sleep time period. In the communication system, a short DRX cycle (short DRX cycle) or a long DRX cycle (long DRX cycle) may be separately configured for the terminal device based on different service scenarios. For example, when a voice service is performed, a voice codec usually sends one voice data packet every 20 milliseconds (ms). In this case, a short DRX cycle with a length of 20 ms may be configured. A long DRX cycle may be configured in a long silent period during a voice call.

To be specific, if a configuration of the terminal device includes a short DRX cycle timer and a long DRX cycle timer, the terminal device runs based on the short DRX cycle, and enters a running state of a long DRX cycle after the short DRX cycle timer expires.

In addition, after the active time ends or the short DRX cycle timer expires, the terminal device enters a running phase of a long DRX cycle.

The following describes, by using examples, timers used in the DRX mechanism.

### 1. On duration timer (on duration timer)

The on duration timer is configured to determine duration of a wake-up time period. During running of the on duration timer, or before the on duration timer expires, the terminal device is in a wake-up time period (on duration), and the terminal device may enable a receive antenna to monitor a PDCCH.

### 2. DRX-inactivity timer (drx-Inactivity timer)

Specifically, it is assumed that a subframe 0 is a last subframe in the on duration. In this case, data of a large byte on a network side needs to be sent to the terminal device, and the data cannot be completely sent in the subframe 0. If the on duration timer is used for operation, the terminal device enters a DRX sleep mode in a subframe 1, does not monitor the PDCCH, and cannot receive data of a physical downlink shared channel (physical downlink shared channel, PDSCH) from the network side. When the DRX cycle ends, and next on duration arrives, the network side continues to send, to the terminal device, data that is not completely transmitted. Although this processing mechanism is correct, a processing delay of all services is significantly increased. To avoid this case, when the terminal device obtains the PDCCH through monitoring in the wake-up time period (on duration), the drx-Inactivity timer is added into the DRX mechanism. If the drx-Inactivity timer is running, even if the originally configured on duration timer expires (that is, the on duration ends), the terminal device still needs to continue to monitor a downlink PDCCH subframe until the drx-Inactivity timer expires. After the drx-Inactivity mechanism is added, a data processing delay is significantly reduced.

### 3. DRX-retransmission timer (drx-Retransmission Timer)

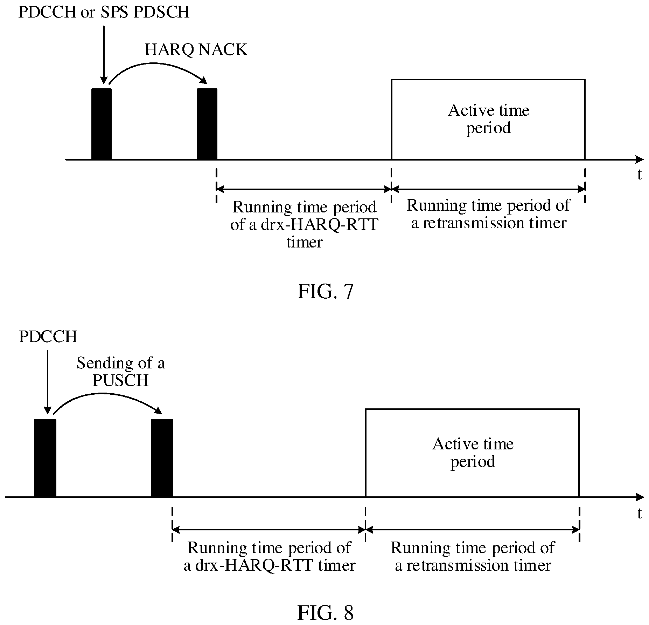

In the DRX mechanism, when the terminal device receives a PDCCH indicating downlink (downlink, DL) transmission or receives a PDSCH indicating semi-persistent scheduling (semi-persistent scheduling, SPS), if the terminal device fails to receive data, retransmission needs to be performed. As shown in FIG. 7, after the terminal device feeds back a hybrid automatic repeat request (hybrid automatic repeat request, HARQ) negative acknowledgment (negative acknowledgment, NACK) to the network device, the terminal device starts a drx-HARQ-RTT Timer for a corresponding HARQ process. The drx-HARQ-RTT Timer indicates minimum duration in which the terminal device expects to receive HARQ retransmission indication information. In other words, the terminal device does not expect to receive downlink retransmission indication information during the drx-HARQ-RTT Timer. After the drx-HARQ-RTT Timer expires, the terminal device starts a drx-Retransmission Timer DL. The drx-Retransmission Timer DL indicates maximum duration in which the terminal device receives the DL retransmission indication information. During the drx-Retransmission Timer DL, the terminal device is in an active state, and receives retransmission of the PDCCH and the PDSCH. In other words, the drx-Retransmission Timer DL refers to a time length for monitoring, after the drx-HARQ-RTT Timer expires, the PDCCH by the UE to receive data that needs to be retransmitted due to a transmission failure.

Similarly, for uplink (uplink, UL) transmission, as shown in FIG. 8, when the terminal device receives a PDCCH indicating the uplink transmission or receives a physical uplink shared channel (physical uplink shared channel, PUSCH) of a configured grant (configured grant, CG), after completing uplink PUSCH transmission, the terminal device starts a drx-HARQ-RTT Timer for a corresponding HARQ process. The drx-HARQ-RTT Timer indicates minimum duration in which the terminal device expects to receive HARQ retransmission indication information. In other words, the terminal device does not expect to receive uplink retransmission indication information during the drx-HARQ-RTT Timer. After the drx-HARQ-RTT Timer expires, the terminal device starts drx-Retransmission Timer UL. The drx-Retransmission Timer UL indicates maximum duration in which the terminal device receives the UL retransmission indication information. During the drx-Retransmission Timer UL, the terminal device is in an active state, and receives a PDCCH indicating retransmission of a PDSCH. In other words, the drx-Retransmission Timer UL refers to a time length for monitoring, after the drx-HARQ-RTT Timer expires, the PDCCH by the UE to send data that needs to be retransmitted due to a transmission failure.

In this application, the active time period may include a time period corresponding to a running period of at least one of the on duration timer, the drx-Inactivity timer, the drx-Retransmission Timer DL, and the drx-Retransmission Timer UL.

It should be understood that the foregoing enumerated timers are merely examples for description. This application is not limited thereto.

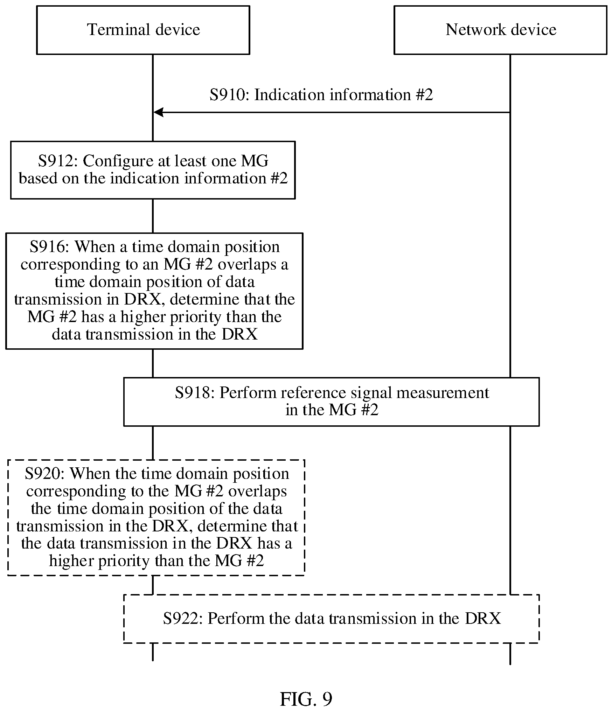

An embodiment of this application provides a priority-based transmission method in a DRX communication system, as shown in FIG. 9.

It needs to be noted that in FIG. 9, the method is illustrated by using an example in which a terminal device and a network device are used as execution entities of interaction illustration. However, the execution entities of the interaction illustration are not limited in this application. For example, the network device in FIG. 9 may alternatively be a chip, a chip system, or a processor that supports the network device in implementing the method, or may be a logical module or software that can implement all or some functions of the network device. The terminal device in FIG. 9 may alternatively be a chip, a chip system, or a processor that supports the terminal device in implementing the method, or may be a logical module or software that can implement all or some functions of the terminal device.

In the following embodiments of this application, a scenario is considered in which time periods of a drx-Inactivity timer, a drx-Retransmission Timer DL, and a drx-Retransmission Timer UL in a DRX communication system overlap an MG in time domain.

Step S910: The network device sends indication information #2 to the terminal device, where the indication information #2 indicates to configure at least one MG, and the indication information #2 includes a priority parameter of each MG in the at least one MG. The terminal device receives the indication information #2.

Step S912: The terminal device configures the at least one MG based on the indication information #2.

Step S914: The terminal device determines whether a time domain position of a current DRX active time period overlaps a time domain position of a measurement gap corresponding to the MG #2.

Specifically, the MG #2 may be an MG with a high priority selected by the terminal device from the at least one MG.

Step S916 and step S918: If the terminal device determines that data transmission in the current DRX active time period overlaps the MG #2 in time domain, the terminal device may further determine priorities of the MG #2 and the data transmission in the current DRX active time period.

Specifically, when the data transmission in the current DRX active time period overlaps the MG #2 in time domain, if the MG #2 has a higher priority than the data transmission in the current DRX active time period, MG #2 measurement is preferentially performed; or if the data transmission in the current DRX active time period has a higher priority than the MG #2, data transmission in the current DRX active time period is preferentially performed.

It should be understood that the data transmission in the current DRX active time period may not only represent uplink data transmission, but also represent downlink data transmission.

In addition, the priority of the data transmission in the current DRX active time period may also indicate a priority of a signal or a priority of a channel.

For a method for determining whether the MG #2 has a high priority or a low priority, refer to step S416. Details are not described herein again.

Specifically, methods for determining the priority of the data transmission in the current DRX active time period are as follows:
Method 1: The priority may be indicated by a value of a priority index (priority index) of a PDCCH that triggers or is associated with the current DRX active time period.

For example, when a priority index of a PDCCH associated with a drx-Inactivity timer is 1, it indicates that the drx-Inactivity timer has a high priority; or when the priority index of the PDCCH associated with the drx-Inactivity timer is 0, it indicates that the drx-Inactivity timer has a low priority. The priority index may be another specific value. This is not limited in this application.

Method 2: The priority may be indicated by values of priority indexes (priority indexes) of a PDCCH, a PDSCH, and a PUSCH that trigger or are associated with a drx-Inactivity timer.

Specifically, when a drx-HARQ-RTT Timer DL expires, a drx-Retransmission Timer DL is activated. Because the drx-HARQ-RTT Timer DL is activated when the PDCCH or the PDSCH is received, a drx-HARQ-RTT Timer may be associated with the PDCCH or the PDSCH.

Alternatively, when a drx-HARQ-RTT Timer UL expires, a drx-Retransmission Timer UL is activated. Because the drx-HARQ-RTT Timer UL is activated when the PDCCH or the PUSCH is received, a drx-HARQ-RTT Timer may be associated with the PDCCH or the PUSCH.

Specifically, the setting of the priority index of the data transmission in the DRX active time period may be indicated by the network device to the terminal device.

When it is separately determined whether the MG has a high priority or a low priority, and it is separately determined whether the data transmission in the current DRX active time period has a high priority or a low priority, a rule for the terminal device to determine an execution sequence of the MG #2 and the data transmission in the current DRX active time period may be: high-priority MG #2 > high-priority data transmission in the DRX active time period > low-priority MG #2 > low-priority data transmission in the DRX active time period.

For example, the terminal device determines, based on the foregoing method for determining whether the MG has a high priority or a low priority, that the MG #2 has a high priority, and determines, based on the method for determining whether the data transmission in the DRX active time period has a high priority or a low priority, that the data transmission in the DRX active time period also has a high priority. When the MG #2 overlaps the data transmission in the DRX active time period in time domain, MG #2 measurement is preferentially performed.

Similarly, the terminal device determines, based on the foregoing method for determining whether the MG has a high priority or a low priority, that the MG #2 has a low priority, and determines, based on the method for determining whether the data transmission in the DRX active time period has a high priority or a low priority, that the data transmission in the DRX active time period also has a low priority. When the MG #2 overlaps the data transmission in the DRX active time period in time domain, MG #2 measurement is preferentially performed.

Alternatively, the terminal device determines, based on the foregoing method for determining whether the MG has a high priority or a low priority, that the MG #2 has a high priority, and determines, based on the method for determining whether the data transmission has a high priority or a low priority, that the data transmission in the DRX active time period has a low priority. When the MG #2 overlaps the data transmission in time domain, MG #2 measurement is preferentially performed.

Alternatively, in step S920 and step S922, the terminal device determines, based on the foregoing method for determining whether the MG has a high priority or a low priority, that the MG #2 has a low priority, and determines, based on the method for determining whether the data transmission in the DRX active time period has a high priority or a low priority, that the data transmission has a high priority. When the MG #2 overlaps the data transmission in time domain, the data transmission in the DRX active time period is preferentially performed. In this case, it may also be considered that the MG #2 is deactivated.

A time interval between a start moment of the MG #2 and a moment at which the terminal device determines the priorities of the MG #2 and the data transmission in the DRX active time period cannot be excessively short. For example, when the terminal device performs measurement of an inter-frequency cell, the terminal device needs to perform carrier frequency handover. When the terminal device determines to preferentially perform MG #2 measurement of the inter-frequency cell, because a delay needs to be processed during the carrier frequency handover, the network device may configure an offset (MG_offset) for the terminal device. If a time interval between a determining moment of the terminal device and a start moment of the MG #2 is greater than or equal to the offset, the terminal device determines, based on a determining result, whether to activate the MG #2; otherwise, the terminal device normally performs the MG #2 measurement.

When the MG measurement conflicts with the data transmission in the DRX active time period, that is, the drx-Inactivity timer, the drx-Retransmission Timer DL, or the drx-Retransmission Timer UL in time domain, by using the foregoing priority determining-based transmission method, impact of the MG measurement on a time-critical service can be reduced, and service performance can be improved.

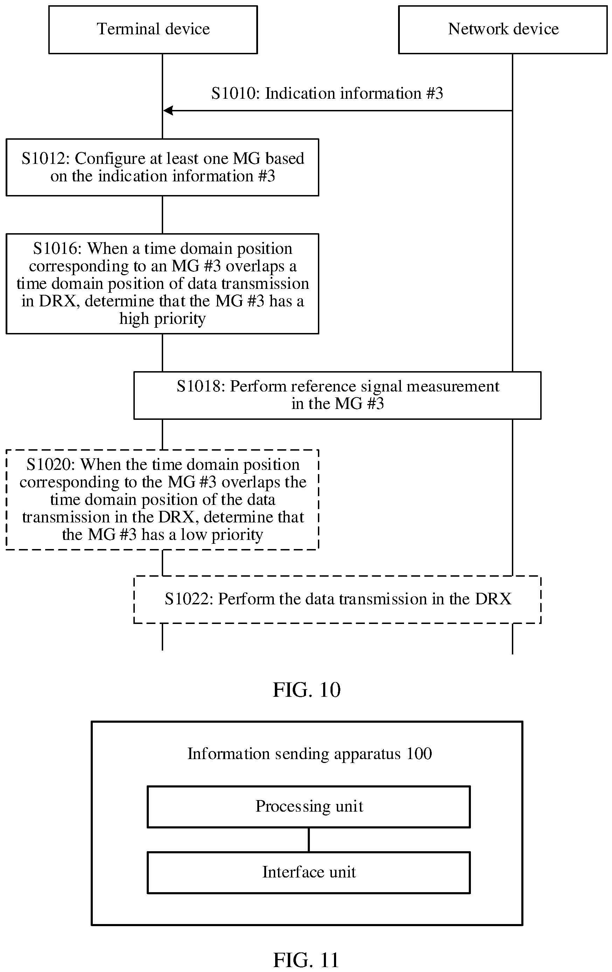

An embodiment of this application provides another priority-based transmission method in a DRX communication system, as shown in FIG. 10.

It needs to be noted that in FIG. 10, the method is illustrated by using an example in which a terminal device and a network device are used as execution entities of interaction illustration. However, the execution entities of the interaction illustration are not limited in this application. For example, the network device in FIG. 10 may alternatively be a chip, a chip system, or a processor that supports the network device in implementing the method, or may be a logical module or software that can implement all or some functions of the network device. The terminal device in FIG. 10 may alternatively be a chip, a chip system, or a processor that supports the terminal device in implementing the method, or may be a logical module or software that can implement all or some functions of the terminal device.

Step S1010: The network device sends indication information #3 to the terminal device, where the indication information #3 indicates to configure at least one MG, and the indication information #3 includes a priority parameter of each MG in the at least one MG. The terminal device receives the indication information #3.

Step S1012: The terminal device configures the at least one MG based on the indication information #3.

Step S1014: The terminal device determines whether a time domain position of a current DRX active time period overlaps a time domain position corresponding to an MG #3.

Specifically, the MG #3 may be an MG with a high priority selected by the terminal device from at least one MG pattern.

Step S1016 and step S1018: If the terminal device determines that data transmission in the current DRX active time period overlaps the MG #3 in time domain, the terminal device may further determine whether the MG #3 has a high priority.

Specifically, when the data transmission in the current DRX active time period overlaps the MG #2 in time domain, if the MG #3 has a high priority, MG #3 measurement is preferentially performed.

Step S1020 and step S1022: If the terminal device determines that the time domain position of the current DRX active time period overlaps the time domain position corresponding to the MG #3, and the terminal device determines that the MG #3 has a low priority, the data transmission in the current DRX active time period is preferentially performed.

It should be understood that the data transmission in the current DRX active time period may not only represent uplink data transmission, but also represent downlink data transmission.

In addition, a priority of the data transmission in the current DRX active time period may also indicate a priority of a signal or a priority of a channel.

For a method for determining whether the MG #3 has a high priority or a low priority, refer to step S416. Details are not described herein again.

A time interval between a start moment of the MG #3 and a moment at which the terminal device determines the priorities of the MG #3 and the data transmission in the DRX active time period cannot be excessively short. For example, when the terminal device performs measurement of an inter-frequency cell, the terminal device needs to perform carrier frequency handover. When the terminal device determines to preferentially perform MG #3 measurement of the inter-frequency cell, because a delay needs to be processed during the carrier frequency handover, the network device may configure an offset (MG_offset) for the terminal device. If a time interval between a determining moment of the terminal device and a start moment of the MG #3 is greater than or equal to the offset, the terminal device determines, based on a determining result, whether to activate the MG #3; otherwise, the terminal device normally performs the MG #3 measurement.

When the MG measurement conflicts with the data transmission in the DRX active time period, that is, drx-Inactivity timer, drx-Retransmission Timer DL, or drx-Retransmission Timer UL in time domain, by using the foregoing priority determining-based transmission method, impact of the MG measurement on a time-critical service can be reduced, and service performance can be improved.

In addition, to ensure transmission of important data, when the terminal device determines that data transmission in a current DRX active time period overlaps the MG #3 in time domain, the terminal device may automatically disable (or deactivate) the MG #1, the MG #2, or the MG #3, to ensure the data transmission in the current DRX active time period, that is, the drx-Inactivity timer, the drx-Retransmission Timer DL, or the drx-Retransmission Timer UL.

In addition, to flexibly indicate an operation of the terminal device based on actual data transmission and an urgency degree of an MG measurement requirement, the network device may activate or deactivate an MG #4 by using downlink control information (downlink control information, DCI).

Specifically, the MG #4 may be an MG with a high priority selected by the terminal device from the at least one MG.

Specifically, the DCI may be classified into scheduling DCI and non-scheduling DCI.

The scheduling DCI may be sent by the network device to the terminal device when there is data to be sent. The scheduling DCI may include indication information #4. The indication information #4 may indicate the terminal device to activate the current MG #4 or deactivate the current MG #4. Alternatively, the indication information #4 may indicate an occasion (occasion) for the terminal device to activate next MG measurement or an occasion for the terminal device to deactivate next MG measurement.

For example, the scheduling DCI may be a DCI format 0_0, a DCI format 0_1, a DCI format 0_2, a DCI format 1_0, a DCI format 1_1, a DCI format 1_2, or the like. An information form of the scheduling DCI is not limited in this application.

Specifically, the occasion for the MG measurement may represent a next MGL in a measurement period.

The non-scheduling DCI may be common DCI, and the non-scheduling DCI may be sent by the network device to a plurality of terminal devices. The non-scheduling DCI may include indication information #5. The indication information #5 may indicate the terminal device to activate the current MG #4 or deactivate the current MG #4. Alternatively, the indication information #5 may indicate an occasion (occasion) for the terminal device to activate next MG measurement or an occasion for the terminal device to deactivate next MG measurement. Alternatively, the indication information #5 may indicate all occasions (occasions) for the terminal device to activate MG measurement in a next DRX cycle or all occasions for the terminal device to deactivate MG measurement in a next DRX cycle. Alternatively, the indication information #5 may indicate a quantity of occasions for the terminal device to activate subsequent MG measurement or a quantity of occasions for the terminal device to deactivate subsequent MG measurement.

For example, the non-scheduling DCI may be a DCI format 2_6 or the like. An information form of the non-scheduling DCI is not limited in this application.

Specifically, the quantity of occasions for subsequent MG measurement may be expressed as follows: 1 bit in the non-scheduling DCI may be used to represent a next occasion for activating/deactivating MG measurement, or 3 bits in the non-scheduling DCI may be used to represent next three occasions for activating/deactivating MG measurement, and so on.

In addition, the DCI may alternatively be redesigned DCI, and the redesigned DCI may be scrambled by using a new radio network temporary identifier (radio network temporary identifier, RNTI). The redesigned DCI may include indication information #6. The indication information #6 may indicate the terminal device to activate the current MG #4 or deactivate the current MG #4. Alternatively, the indication information #6 may indicate an occasion (occasion) for the terminal device to activate next MG measurement or an occasion for the terminal device to deactivate next MG measurement. Alternatively, the indication information #6 may indicate all occasions (occasions) for the terminal device to activate MG measurement in a next DRX cycle or all occasions for the terminal device to deactivate MG measurement in a next DRX cycle. Alternatively, the indication information #6 may indicate a quantity of occasions for the terminal device to activate subsequent MG measurement or a quantity of occasions for the terminal device to deactivate subsequent MG measurement.

A time interval between a start moment of the MG #4 and a moment at which the terminal device determines the priorities of the MG #4 and the data transmission in the DRX active time period cannot be excessively short. For example, when the terminal device performs measurement of an inter-frequency cell, the terminal device needs to perform carrier frequency handover. When the terminal device determines to preferentially perform MG #4 measurement of the inter-frequency cell, because a delay needs to be processed during the carrier frequency handover, the network device may configure an offset (MG_offset) for the terminal device. If a time interval between a determining moment of the terminal device and a start moment of the MG #4 is greater than or equal to the offset, the terminal device determines, based on the indication information #4, the indication information #5, and the indication information #6, whether to activate the MG #4.

Specifically, the indication information #4, the indication information #5, and the indication information #6 may be delivered to the terminal device at a moment at which a time interval from the start moment of the MG #4 is greater than or equal to the foregoing MG_offset.

The network device dynamically indicates, based on the DCI, the terminal device to activate or deactivate the MG measurement. This has high flexibility, avoids impact of the MG measurement on a time-critical service, and improves service performance.

FIG. 11 is a block diagram of an information sending apparatus 100 according to an embodiment of this application. The information sending apparatus 100 may correspond to (for example, may be configured or may be) the terminal device and the network device described in embodiments of FIG. 4, FIG. 9, and FIG. 10. In addition, modules or units in the information sending apparatus 100 are respectively configured to perform actions or processing processes performed by the terminal device and the network device described in embodiments of FIG. 4, FIG. 9, and FIG. 10. To avoid repetition, the detailed descriptions are omitted herein.

In this embodiment of this application, the apparatus 100 may be the terminal device and the network device described in embodiments in FIG. 4, FIG. 9, and FIG. 10. In this case, the apparatus 100 may include a processor and a transceiver, and the processor is communicatively connected to the transceiver.

Optionally, the apparatus further includes a memory. The memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to send information or a signal.

In this case, an interface unit in the apparatus 100 shown in FIG. 11 may correspond to the transceiver, and a processing unit in the apparatus 100 shown in FIG. 11 may correspond to the processor.

In this embodiment of this application, the apparatus 100 may be a chip (or a chip system) installed in the terminal device and the network device described in embodiments of FIG. 4, FIG. 9, and FIG. 10. In this case, the apparatus 100 may include a processor and an input/output interface. The processor may be, through the input/output interface, communicatively connected to the terminal device and the transceiver of the network device described in embodiments of FIG. 4, FIG. 9, and FIG. 10. Optionally, the apparatus further includes a memory, and the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to send information or a signal.

In this case, the interface unit in the apparatus 100 shown in FIG. 11 may correspond to the input/output interface, and the processing unit in the apparatus 100 shown in FIG. 11 may correspond to the processor.

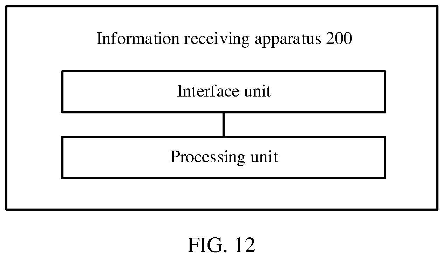

FIG. 12 is a block diagram of an information receiving apparatus 200 according to an embodiment of this application. The information receiving apparatus 200 may correspond to (for example, may be configured to implement) the terminal device and the network device described in embodiments of FIG. 4, FIG. 9, and FIG. 10. In addition, modules or units in the information receiving apparatus 200 are respectively configured to perform actions or processing processes performed by the terminal device and the network device described in embodiments of FIG. 4, FIG. 9, and FIG. 10. To avoid repetition, the detailed descriptions are omitted herein.

In this embodiment of this application, the apparatus 200 may be the terminal device and the network device described in embodiments in FIG. 4, FIG. 9, and FIG. 10. In this case, the apparatus 200 may include a processor and a transceiver, and the processor is communicatively connected to the transceiver. Optionally, the apparatus further includes a memory, and the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to receive information or a signal.

In this case, an interface unit in the apparatus 200 shown in FIG. 12 may correspond to the transceiver, and a processing unit in the apparatus 200 shown in FIG. 12 may correspond to the processor.

In this embodiment of this application, the apparatus 200 may be a chip (or a chip system) installed in the terminal device and the network device described in embodiments of FIG. 4, FIG. 9, and FIG. 10. In this case, the apparatus 200 may include a processor and an input/output interface. The processor may be, through the input/output interface, communicatively connected to the terminal device and the transceiver of the network device described in embodiments of FIG. 4, FIG. 9, and FIG. 10. Optionally, the apparatus further includes a memory, and the memory is communicatively connected to the processor. Optionally, the processor, the memory, and the transceiver may be communicatively connected to each other. The memory may be configured to store a program or instructions. The processor is configured to execute the program or the instructions stored in the memory, to control the transceiver to receive information or a signal.

In this case, the interface unit in the apparatus 200 shown in FIG. 12 may correspond to an input interface, and the processing unit in the apparatus 200 shown in FIG. 12 may correspond to the processor.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for the particular applications, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separated, and components displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving configuration information, wherein the configuration information is for configuring a measurement gap, the measurement gap is for reference signal measurement, and a time domain position of the measurement gap overlaps a time domain position of information transmission; and
performing the information transmission when a priority of the information transmission is higher than a priority of the measurement gap.

2. The method according to claim 1, wherein the performing the information transmission when a priority of the information transmission is higher than a priority of the measurement gap comprises:
performing the information transmission when the priority of the measurement gap is configured as a low priority, and the priority of the information transmission is configured as a high priority.

3. The method according to claim 1, wherein the performing the information transmission when a priority of the information transmission is higher than a priority of the measurement gap comprises:
performing the information transmission when the priority of the measurement gap is configured as a low priority.

4. The method according to any one of claims 1 to 3, wherein the method comprises:
performing the reference signal measurement in the measurement gap when the priority of the information transmission is lower than the priority of the measurement gap.

5. The method according to claim 4, wherein the performing the reference signal measurement in the measurement gap when the priority of the information transmission is lower than the priority of the measurement gap comprises:
performing the reference signal measurement in the measurement gap when the priority of the measurement gap is configured as a high priority, or the priority of the information transmission is configured as a low priority.

6. The method according to any one of claims 1 to 5, wherein the information transmission comprises information transmission in a discontinuous reception DRX active time period.

7. The method according to claim 6, wherein the DRX active time period comprises at least one of a running time period of an inactivity timer, a running time period of an uplink retransmission timer, and a running time period of a downlink retransmission timer.

8. The method according to claim 6 or 7, wherein the priority of the information transmission is determined based on a priority indicated by a physical channel, and the physical channel is associated with the DRX active time period.

9. The method according to any one of claims 1 to 8, wherein the configuration information comprises a parameter, and the parameter is for configuring the measurement gap as a high-priority measurement gap or a low-priority measurement gap.

10. The method according to any one of claims 1 to 8, wherein the configuration information comprises a threshold, and the threshold is for determining the measurement gap as a high-priority measurement gap or a low-priority measurement gap.

11. A communication apparatus, wherein the apparatus comprises:
an interface unit, configured to receive configuration information, wherein the configuration information is for configuring a measurement gap, the measurement gap is for reference signal measurement, and a time domain position of the measurement gap overlaps a time domain position of information transmission; and
a processing unit, configured to: when a priority of the information transmission is higher than a priority of the measurement gap, control the apparatus to perform the information transmission.

12. The apparatus according to claim 11, wherein that the processing unit is configured to:
when a priority of the information transmission is higher than a priority of the measurement gap, control the apparatus to perform the information transmission comprises:
the processing unit is configured to: when the priority of the measurement gap is configured as a low priority, and the priority of the information transmission is configured as a high priority, control the apparatus to perform the information transmission.

13. The apparatus according to claim 11, wherein that the processing unit is configured to:
when a priority of the information transmission is higher than a priority of the measurement gap, control the apparatus to perform the information transmission comprises:
the processing unit is configured to: when the priority of the measurement gap is configured as a low priority, control the apparatus to perform the information transmission.

14. The apparatus according to any one of claims 11 to 13, wherein the processing unit is further configured to: when the priority of the information transmission is lower than the priority of the measurement gap, control the apparatus to perform the reference signal measurement in the measurement gap.

15. The apparatus according to claim 14, wherein that the processing unit is further configured to: when the priority of the information transmission is lower than the priority of the measurement gap, control the apparatus to perform the reference signal measurement in the measurement gap comprises:
the processing unit is further configured to: when the priority of the measurement gap is configured as a high priority, or the priority of the information transmission is configured as a low priority, control the apparatus to perform the reference signal measurement in the measurement gap.

16. The apparatus according to any one of claims 11 to 15, wherein the information transmission comprises information transmission in a discontinuous reception DRX active time period.

17. The apparatus according to claim 16, wherein the DRX active time period comprises at least one of a running time period of an inactivity timer, a running time period of an uplink retransmission timer, and a running time period of a downlink retransmission timer.

18. The apparatus according to claim 16 or 17, wherein the priority of the information transmission is determined based on a priority indicated by a physical channel, and the physical channel is associated with the DRX active time period.

19. The apparatus according to any one of claims 11 to 18, wherein the configuration information comprises a parameter, and the parameter is for configuring the measurement gap as a high-priority measurement gap or a low-priority measurement gap.

20. The apparatus according to any one of claims 11 to 18, wherein the configuration information comprises a threshold, and the threshold is for determining the measurement gap as a high-priority measurement gap or a low-priority measurement gap.

21. A communication apparatus, comprising:
a processor, wherein the processor is coupled to a memory, the memory is configured to store a program or instructions, and when the program or the instructions are executed by the processor, the apparatus is enabled to perform the communication method according to any one of claims 1 to 10.

22. A computer-readable storage medium, wherein the computer-readable storage medium stores a computer program, and when the computer program is run on a computer, the computer is enabled to perform the communication method according to any one of claims 1 to 10.

23. A computer program product, comprising computer program code, wherein when the computer program code is run, the communication method according to any one of claims 1 to 10 is implemented.
